# EUROPEAN PATENT APPLICATION

(11) **EP 4 578 765 A1**
(43) Date of publication of application: **02.07.2025**
(21) Application number: 24222007.7
(22) Date of filing: 20.12.2024
(51) Int. Cl.: B62D 25/08, B62D 27/06, B62D 29/00

(54) **VEHICLE**

(30) Priority: 27.12.2023 JP 2023221722
(71) Applicant: TOYOTA JIDOSHA KABUSHIKI KAISHA, Aichi-ken, 471-8571 (JP)
(72) Inventor: KAWASHIMA, Mutsumi, TOYOTA-SHI, AICHI-KEN, 471-8571 (JP); MURATA, Soshiro, TOYOTA-SHI, AICHI-KEN, 471-8571 (JP)
(74) Representative: Cabinet Beau de Loménie

(57) **Abstract**

A front side member (38) is provided as a separate body from a single-piece casting member (24) including a wheel arch (12). Thus, even when the wheel arch (12) itself has an open cross-section structure, a lower part of the wheel arch (12) can have a closed cross-section structure by fixing the front side member (38) to the lower part of the wheel arch (12). For this reason, even with a configuration including the single-piece casting member (24) having a so-called open cross-section structure, which makes it possible to improve stiffness in the wheel arch (12) including the front side member (38), an energy absorption amount can be ensured.

## Description

### 1. Field of the Invention

The invention relates to a vehicle.

### 2. Description of Related Art

WO 2022/031991, for example, describes a vehicle including a structure in which members corresponding to right and left wheel arches, a cross member connecting the right and left wheel arches, and front side members are molded in a single piece by die-casting.

### SUMMARY OF THE INVENTION

In general, when a collision load is input to a vehicle in a vehicle front and rear direction in the event of a frontal collision of the vehicle (hereinafter, referred to as "in the event of a vehicle frontal collision"), an energy absorption amount resulting from compression or crushing of the front side members is greater as compared to other components around the front side members. On the other hand, when the front side members of the vehicle according to the above-described existing technology are molded, dies are caused to slide toward outer sides in a vehicle width direction. Therefore, each of the front side members has a substantially U-shape, so-called open cross-section structure in which the outer side in the vehicle width direction is open, with the result that the stiffness is lower than that of a closed cross-section structure.

The invention provides a vehicle capable of ensuring an energy absorption amount even with a configuration including a single-piece casting member having an open cross-section structure.

An aspect of the invention provides a vehicle. The vehicle includes: a single-piece casting member configured to include right and left wheel arches and a cross member extending in a vehicle width direction and connecting the right and left wheel arches, the right and left wheel arches and the cross member being cast in a single piece, or the right and left wheel arches and the cross member being divided at a coupling part provided at a predetermined location in the vehicle width direction, divided parts each being cast in a single piece, and the divided parts being coupled to each other in a single piece at the coupling part; and a side member fixed to a lower part of a corresponding one of the wheel arches that are components of part of the single-piece casting member and extending in a vehicle front and rear direction.

The vehicle according to the above aspect includes the single-piece casting member and the side member. The single-piece casting member is configured to include the right and left wheel arches and the cross member. The cross member extends in the vehicle width direction. The right and left wheel arches are connected by the cross member.

Here, in the single-piece casting member according to the aspect of the invention, for example, the right and left wheel arches and the cross member are cast in a single piece. Alternatively, the single-piece casting member according to the invention may be formed such that the right and left wheel arches and the cross member are divided at a coupling part provided at a predetermined location in the vehicle width direction, divided parts each are cast in a single piece, and then the divided parts are coupled to each other in a single piece at the coupling part.

When, for example, the coupling part is set at a substantially central part in the vehicle width direction, the right wheel arch and the right half of the cross member are cast in a single piece (right-side casting member), and the left wheel arch and the left half of the cross member are cast in a single piece (left-side casting member). Then, the right-side casting member and the left-side casting member each cast in a single piece are coupled at the coupling part into one piece to form a single-piece casting member. This case is also included in the single-piece casting member according to the aspect of the invention.

Furthermore, in the aspect of the invention, the side member extending in the vehicle front and rear direction is fixed to the lower part of a corresponding one of the wheel arches that are components of part of the single-piece casting member.

In general, when a collision load is input to a vehicle in the vehicle front and rear direction, front side members and rear side members take in charge of a major proportion of energy absorption through compression or crushing. On the other hand, when wheel arches and side members are cast in a single piece, the wheel arches and the side members each have a substantially U-shape open cross-section structure in which the outer side or the inner side in the vehicle width direction is open because of the structure of dies.

In the aspect of the invention, when the side member is formed separately from the single-piece casting member including the wheel arches, even when a corresponding one of the wheel arches itself has an open cross-section structure, the lower part of the wheel arch can have a closed cross-section structure by fixing the side member to the lower part of the wheel arch.

For this reason, it is possible to improve stiffness in the wheel arch provided with the side member. In other words, in the aspect of the invention, even with a configuration including the single-piece casting member having a so-called open cross-section structure, it is possible to ensure an energy absorption amount.

In the side member according to the aspect of the invention, the side member itself may have a closed cross-section structure or a closed cross-section structure may be configured between the side member and the lower part of the wheel arch having an open cross-section structure. Since the side member is formed separately from the single-piece casting member, the side member may be an extrusion member formed of an extrusion material or a sheet metal member formed of a sheet metal. Furthermore, the side member may be formed of a casting member formed by casting.

In the vehicle according to the above aspect, in the single-piece casting member, the right and left wheel arches and the cross member may be cast in a single piece.

In the vehicle according to the above aspect, in the single-piece casting member, the right and left wheel arches and the cross member are cast in a single piece. For this reason, for example, in comparison with a case where a right-side casting member in which the right wheel arch and the right half of the cross member are cast in a single piece and a left-side casting member in which the left wheel arch and the left half of the cross member are cast in a single piece are coupled in a single piece at the coupling part, the number of components (members) can be reduced. Thus, in the aspect of the invention, work for coupling members is reduced, and cost can be reduced accordingly.

In the vehicle according to the above aspect, the side member may be a front side member provided at a vehicle front part.

In the vehicle according to the above aspect, the front side member provided at the vehicle front part needs to ensure a greater energy absorption amount than a rear side member provided at a vehicle rear part, so the side member is a front side member.

In the vehicle according to the above configuration, the front side member may be an extrusion member formed of an extrusion material or a sheet metal member formed of a sheet metal.

In the vehicle according to the above configuration, when the front side member is formed of an extrusion member or a sheet metal member, the front side member can have a higher strength than when the front side member is a casting member.

In the vehicle according to the above configuration, when a cross section of the front side member is taken along the vehicle width direction and a vehicle up and down direction, a sectional shape of the front side member may have a closed cross-section structure with a closed cross section.

In the vehicle according to the above configuration, the front side member has a closed cross-section structure in which the sectional shape taken along the vehicle width direction and the vehicle up and down direction is a closed cross section and can have a higher stiffness than an open cross-section structure as a comparative example, so it is possible to increase an energy absorption amount. Examples of the closed cross-section structure include that the sectional shape is a polygonal shape, such as a rectangular shape and a honeycomb shape.

In the vehicle according to the above configuration, the sectional shape of the front side member may be a substantially rectangular shape, the front side member may include an inner wall that makes up an inner side of the front side member in the vehicle width direction, an outer wall that makes up an outer side of the front side member in the vehicle width direction and that is disposed to be opposed to the inner wall, an upper wall connecting upper ends of the inner wall and the outer wall, and a lower wall connecting lower ends of the inner wall and the outer wall and provided to be opposed to the upper wall, and a corresponding one of the wheel arches may be configured to include an upright wall extending in the vehicle front and rear direction and the vehicle up and down direction, the inner wall being in contact with the upright wall, the front side member being allowed to be coupled to the upright wall.

In the vehicle according to the above configuration, the sectional shape of the front side member is a substantially rectangular shape. The front side member is configured to include an inner wall, an outer wall, an upper wall, and a lower wall. The inner wall and the outer wall are disposed so as to be opposed to each other. The inner wall makes up an inner side of the front side member in the vehicle width direction. The outer wall makes up an outer side of the front side member in the vehicle width direction. The upper wall and the lower wall are disposed so as to be opposed to each other. The upper wall connects upper ends of the inner wall and the outer wall. The lower wall connects lower ends of the inner wall and the outer wall.

On the other hand, the wheel arch is configured to include an upright wall extending in the vehicle front and rear direction and the vehicle up and down direction. The inner wall of the front side member contacts with the upright wall. The front side member is allowed to be coupled to the upright wall. In this way, since the inner wall of the front side member is in contact with and coupled to the upright wall of the wheel arch, it is possible to suppress so-called inward folding in which the front side member folds inward in the vehicle width direction in the event of a vehicle frontal collision, so it is possible to assist in axial compression of the front side member and efficiently absorb impact energy.

In the vehicle according to the above configuration, each of the wheel arches may be configured to further include a first lateral wall projecting from the upright wall toward an outer side in the vehicle width direction and allowed to be opposed to the upper wall, and a second lateral wall projecting from the upright wall toward the outer side in the vehicle width direction, the second lateral wall being disposed so as to be opposed to the first lateral wall, the second lateral wall being allowed to be opposed to the lower wall.

In the vehicle according to the above configuration, each of the wheel arches is configured to further include a first lateral wall and a second lateral wall. The first lateral wall and the second lateral wall are disposed so as to be opposed to each other. The first lateral wall projects toward an outer side in the vehicle width direction from the upright wall and is allowed to be opposed to the upper wall of the front side member. The second lateral wall projects toward the outer side in the vehicle width direction from the upright wall and is allowed to be opposed to the lower wall of the front side member.

In other words, in the aspect of the invention, the front side member is disposed (fixed) in a state of being fitted in the single-piece casting member. For this reason, it is possible to reduce so-called mountain fold or valley fold in which the front side member folds in the vehicle up and down direction in the event of a vehicle frontal collision, and it is possible to assist in axial compression of the front side member and sequentially crumbles the front side member from a front end to a rear end, so it is possible to further efficiently absorb impact energy.

In the vehicle according to the above configuration, the single-piece casting member may be configured to further include a front wall provided at a front end in the vehicle front and rear direction, and a cutout part cut out in the front wall toward an inner side in the vehicle width direction, the front side member being inserted through the cutout part to protrude a front end of the front side member in the vehicle front and rear direction toward a vehicle front side beyond the front wall.

In the vehicle according to the above configuration, the single-piece casting member is configured to further include a front wall and a cutout part. The front wall is provided at a front end of the single-piece casting member in the vehicle front and rear direction. The cutout part in which the front side member can be inserted is cut out in the front wall toward an inner side in the vehicle width direction. In the aspect of the invention, the front side member is inserted in the cutout part, and a front end of the front side member in the vehicle front and rear direction protrudes toward a vehicle front side beyond the front wall of the single-piece casting member.

Thus, in comparison with a configuration in which a crush box serving as a shock absorbing member is additionally provided on a front side of the front side member, it is possible to cause the front end of the front side member to also serve as the crush box. As a result, the number of components can be reduced.

In the vehicle according to the above configuration, the front side member may be coupled to the single-piece casting member by a fastening member.

In the vehicle according to the above configuration, the front side member is coupled to the single-piece casting member by a fastening member, and, in comparison with coupling by welding or the like, it is possible to suppress a decrease in material strength due to heat.

In the vehicle according to the above configuration, the single-piece casting member may be configured to further include a support wall provided on a rear side of the front side member in the vehicle front and rear direction and configured to support a rear end of the front side member, and a reinforcement part provided on a rear side of the support wall in the vehicle front and rear direction, the reinforcement part being configured to include the support wall, the reinforcement part having a higher stiffness than other portions.

In the vehicle according to the above configuration, the single-piece casting member is configured to further include a support wall and a reinforcement part. The support wall is provided on a rear side of the front side member in the vehicle front and rear direction and is configured to support a rear end of the front side member. The reinforcement part is provided on a rear side of the support wall in the vehicle front and rear direction. The reinforcement part is configured to include the support wall. The reinforcement part has a higher stiffness than other portions.

In this way, in the aspect of the invention, since the rear end of the front side member is supported by the support wall provided with the reinforcement part on the rear side in the vehicle front and rear direction, a sufficient reaction force can be obtained for axial compression of the front side member in the event of a vehicle front collision. Thus, in the aspect of the invention, an impact load can be stably applied to the front side member. Conversely, in the aspect of the invention, it is possible to efficiently absorb impact energy by the amount of absorption by the front side member.

As described above, the vehicle according to the aspect of the invention is capable of ensuring an energy absorption amount even with a configuration including a single-piece casting member having a so-called open cross-section structure.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a vehicle according to an embodiment when viewed from a diagonally left front and upper side;
FIG. 2 is a relevant part enlarged perspective view including a relevant part of FIG. 1;
FIG. 3 is a relevant part enlarged side view that shows a vehicle rear side of a front side member at a wheel arch of the vehicle according to the present embodiment;
FIG. 4 is a sectional view taken along the line IV-IV in FIG. 2;
FIG. 5 is a relevant part enlarged perspective view that shows a first modification of the vehicle according to the present embodiment and that corresponds to FIG. 2;
FIG. 6 is a sectional view that shows a second modification of the vehicle according to the present embodiment and that corresponds to FIG. 4; and
FIG. 7 is a sectional view that shows a third modification of the vehicle according to the present embodiment and that corresponds to FIG. 4.

### DETAILED DESCRIPTION OF EMBODIMENTS

Hereinafter, a vehicle body structure according to an embodiment of the invention will be described with reference to the accompanying drawings. In the drawings, the arrow FR indicates a front side in a vehicle front and rear direction, and the arrow UP indicates an upper side in a vehicle up and down direction. The arrow RH indicates a right-hand side in a vehicle width direction and indicates an outer side in the vehicle width direction in the present embodiment. Hereinafter, when described by simply using front and rear, up and down, and right and left directions, these directions respectively mean front and rear in the vehicle front and rear direction, up and down in the vehicle up and down direction, and right and left in a vehicle right and left direction (vehicle width direction) unless otherwise specified.

### Configuration of Vehicle

Initially, the configuration of a vehicle according to the present embodiment will be described.

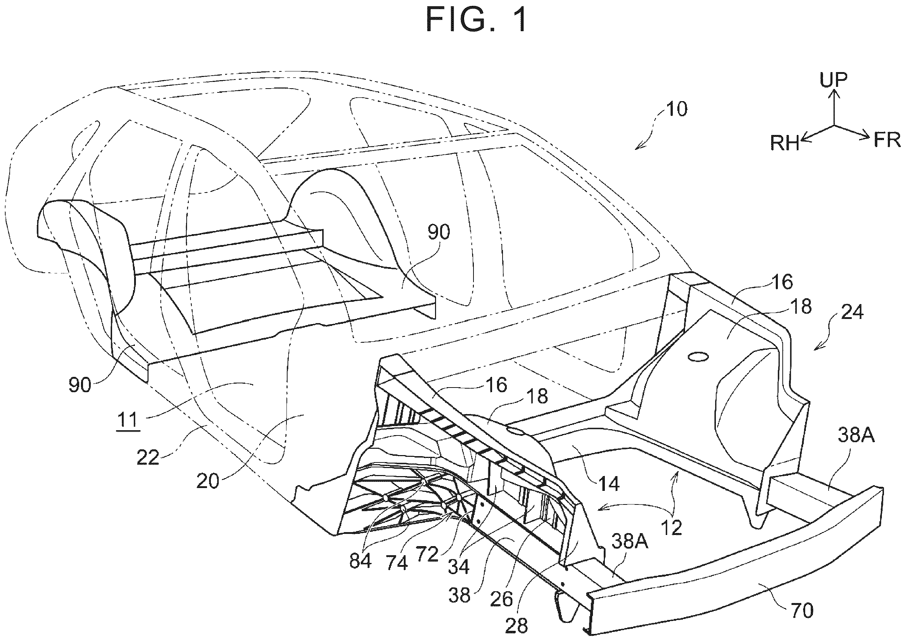

FIG. 1 shows a vehicle overall view that shows the framework of a vehicle 10. Although not shown in the drawing, for example, the vehicle 10 is a battery electric vehicle, a fuel cell electric vehicle, or the like that drives on power generated by a power unit. As shown in FIG. 1, the vehicle 10 according to the present embodiment includes wheel arches 12 in which wheels (not shown) are disposed at right and left sides of a vehicle front part. The right wheel arch 12 and the left wheel arch 12 are connected by a cross member 14.

An apron upper member 16 extends along the vehicle front and rear direction at an upper end of each wheel arch 12. The apron upper member 16 has a substantially U-shape such that the outer side in the vehicle width direction is open. A suspension tower 18 is provided on an inner side of the apron upper member 16 in the vehicle width direction.

A front pillar 20 that makes up a side part of the vehicle front part is coupled to a rear end of the wheel arch 12. Furthermore, a rocker 22 that extends along the vehicle front and rear direction and that makes up a framework of a vehicle body side part is coupled to a rear side of a lower end of the wheel arch 12 in the vehicle front and rear direction.

In the present embodiment, the right and left wheel arches 12, the cross member 14, the apron upper members 16, and the suspension towers 18 are cast in a single piece from an aluminum alloy, a magnesium alloy, or the like, as a material (single-piece casting member 24).

In the single-piece casting member 24 according to the present embodiment, part of dies are caused to slide toward the outer side in the vehicle width direction in forming inner surface sides of the right and left wheel arches 12 because of the structure of dies. For this reason, each of the wheel arches 12 according to the present embodiment is formed such that the outer side in the vehicle width direction is open.

More specifically, the wheel arch 12 has an upright wall 26 extending in the vehicle front and rear direction and the vehicle up and down direction at an inner side in the vehicle width direction. A front wall 28 extending in the vehicle width direction and the vehicle up and down direction projects toward the outer side in the vehicle width direction at a front end of the upright wall 26.

A lateral wall (first lateral wall) 30 projecting toward the outer side in the vehicle width direction and extending along the vehicle front and rear direction is provided at substantially a central part of the upright wall 26 of the wheel arch 12 in the vehicle up and down direction. A lower wall (second lateral wall) 32 projecting toward the outer side in the vehicle width direction and extending along the vehicle front and rear direction is provided at a lower end of the upright wall 26 of the wheel arch 12. In other words, the wheel arch 12 has a substantially U-shaped open cross-section structure such that the outer side in the vehicle width direction is open.

Furthermore, a plurality of longitudinal ribs 34 extends along the vehicle width direction from the upright wall 26 of the wheel arch 12 and spans between the apron upper member 16 and the lateral wall 30. The longitudinal ribs 34 are arranged along the vehicle front and rear direction. A plurality of protruded beads 36 protruding toward an upper side and extending in the vehicle width direction is provided on an upper surface of the lateral wall 30 between the adjacent longitudinal ribs 34. In the present embodiment, a front side member (side member) 38 is fixed between the lateral wall 30 and lower wall 32 of the wheel arch 12.

### Front Side Member

In the present embodiment, the front side member 38 is, for example, an extrusion member formed of an extrusion material. The front side member 38 has a closed cross-section structure 40 of which a sectional shape taken along the vehicle width direction and the vehicle up and down direction is a closed cross section.

More specifically, the sectional shape of the front side member 38 is a substantially rectangular shape of which a longitudinal direction is the vehicle up and down direction. As for the closed cross-section structure 40, the sectional shape may have another polygonal shape, such as a honeycomb shape, other than a rectangular shape.

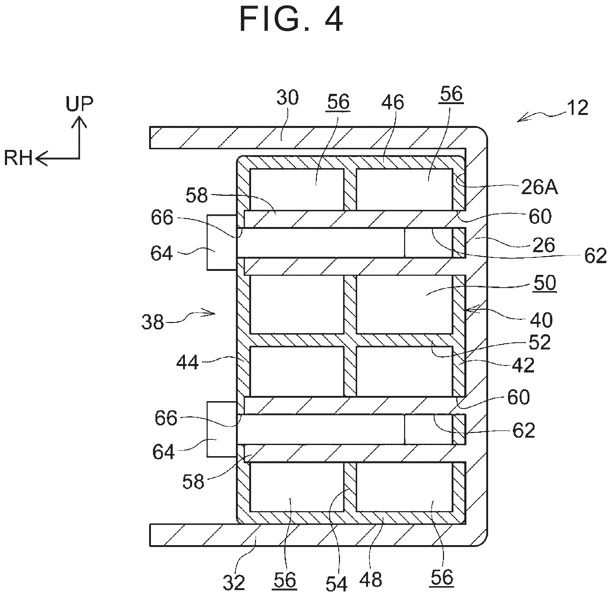

As shown in FIG. 4, the front side member 38 is configured to include an inner wall 42, an outer wall 44, an upper wall 46, and a lower wall 48. The inner wall 42 and the outer wall 44 of the front side member 38 are disposed so as to be opposed to each other. The inner wall 42 makes up an inner side of the front side member 38 in the vehicle width direction. The outer wall 44 makes up an outer side of the front side member 38 in the vehicle width direction.

The upper wall 46 and the lower wall 48 of the front side member 38 are disposed so as to be opposed to each other. The upper wall 46 connects upper ends of the inner wall 42 and the outer wall 44. The lower wall 48 connects lower ends of the inner wall 42 and the outer wall 44. Then, the inner wall 42 and the outer wall 44 are longer in size than the upper wall 46 and the lower wall 48.

Furthermore, in a state where the front side member 38 is fixed between the lateral wall 30 and the lower wall 32 of the wheel arch 12, the upper wall 46 of the front side member 38 can be opposed to the lateral wall 30 of the wheel arch 12, and the lower wall 48 of the front side member 38 can be opposed to the lower wall 32 of the wheel arch 12.

In a closed cross-section part 50 defined by the inner wall 42, the outer wall 44, the upper wall 46, and the lower wall 48, for example, a partition wall 52 that partitions up and down and a partition wall 54 that partitions right and left intersect in a cross shape to form four rooms 56.

Here, a plurality of cylindrical bosses 58 are upright from an inner surface 26A of the upright wall 26 of the wheel arch 12 toward the outer side in the vehicle width direction. On the other hand, the inner wall 42 of the front side member 38 has insertion holes 60 through which the bosses 58 can be inserted, and the outer wall 44 of the front side member 38 has insertion holes 66 through which bolts (fastening members) 64 each having substantially the same size as a hollow part 62 of the boss 58 can be screwed.

The bosses 58 are inserted through the insertion holes 60 formed in the inner wall 42 of the front side member 38, and, in a state where the inner wall 42 of the front side member 38 is in contact with the upright wall 26 of the wheel arch 12, the bolts 64 are screwed to the bosses 58 through the insertion holes 66 formed in the outer wall 44 of the front side member 38. Thus, the front side member 38 is fixed to the wheel arch 12.

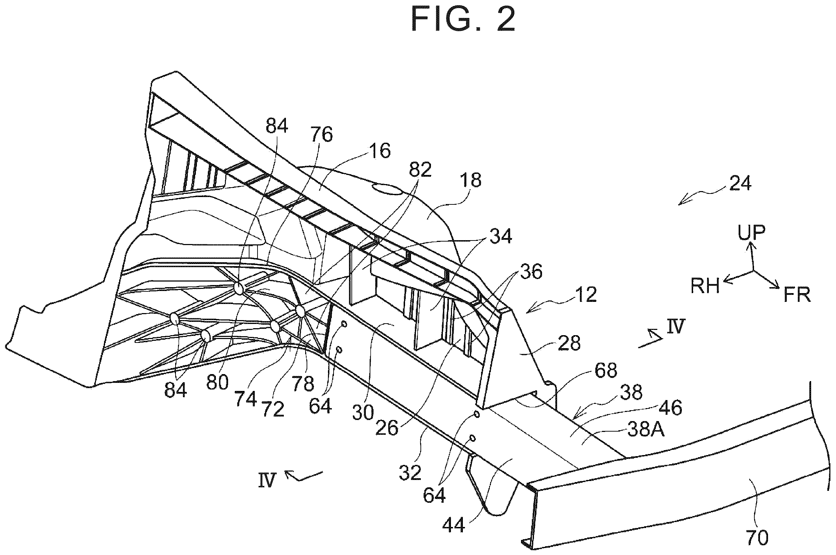

Incidentally, in the present embodiment, as shown in FIG. 2, the front wall 28 projects toward the outer side in the vehicle width direction from the front end of the upright wall 26 of the wheel arch 12. The front wall 28 has a substantially rectangular cutout part 68 that is cut out toward the inner side in the vehicle width direction and through which the front side member 38 can be inserted.

In the present embodiment, a front part (front end) 38A of the front side member 38 is inserted through the cutout part 68, and the front part 38A of the front side member 38 protrudes toward a vehicle front side beyond the front wall 28 of the wheel arch 12. Then, a front bumper 70 extending along the vehicle width direction is coupled to front ends of the right and left front side members 38.

In other words, in the present embodiment, the front part 38A of the front side member 38 has the function of a crush box serving as a so-called shock absorbing member and has a configuration such that no crush box is interposed between the front part 38A of the front side member 38 and the front bumper 70.

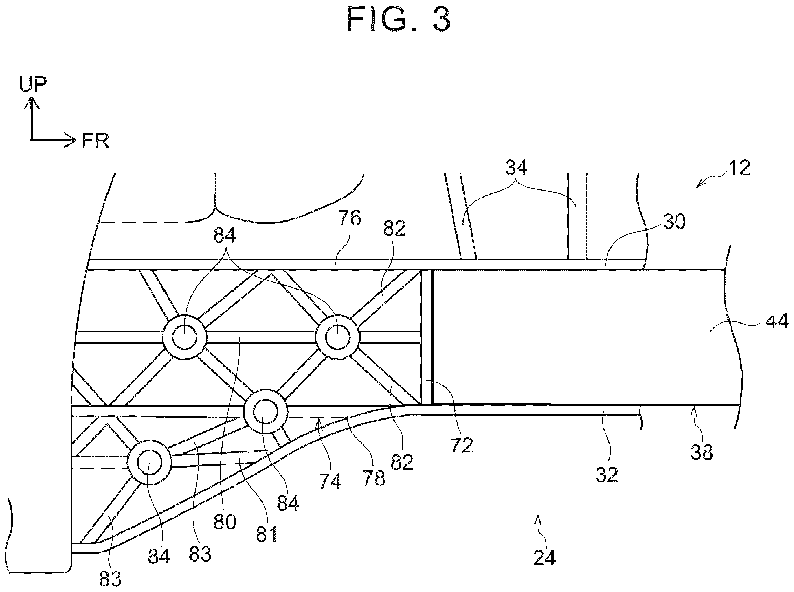

As shown in FIG. 3, a support wall 72 with which a rear end of the front side member 38 can contact is spanned between the lateral wall 30 and the lower wall 32 of the wheel arch 12. The rear end of the front side member 38 can be supported by the support wall 72. The support wall 72 may be thicker than the other longitudinal ribs 34 formed in the wheel arch 12.

A reinforcement part 74 is provided on a rear side of the support wall 72 in the vehicle front and rear direction. The reinforcement part 74 is configured to include a lateral wall 76 elongated from the lateral wall 30 and a lateral wall 78 elongated from the lower wall 32. The lateral walls 76, 78 do not need to be directly connected to the lateral wall 30 and the lower wall 32 and may be separated by the support wall 72 from the lateral wall 30 and the lower wall 32.

A lateral wall 80 formed substantially parallel to the lateral walls 76, 78 is provided at a substantially central part between the lateral wall 76 and the lateral wall 78. Then, pairs of inclined ribs 82 inclined with respect to the lateral walls 76, 78 and intersect with each other at the lateral wall 80 are successively provided along the vehicle front and rear direction between the lateral wall 76 and the lateral wall 78.

In this way, a truss structure made up of a plurality of triangles is formed by providing the inclined ribs 82 between the lateral walls 76, 78, 80. Thus, the reinforcement part 74 has higher stiffness than the other portions (for example, on an upper side of the reinforcement part 74). Since the reinforcement part 74 just needs to have a higher stiffness than the other portions, the shape to be formed is not limited to a triangular shape and may be a honeycomb shape. Not limited to the shape, the thickness of a wall that makes up the reinforcement part 74 may be thicker than the other portions.

A lateral wall 81, formed substantially parallel to the lateral wall 78, and inclined ribs 83 are provided on a lower side of the reinforcement part 74. In other words, on a rear side of the support wall 72 where the rear end of the front side member 38 is supported, the height of a sectional shape in the vehicle up and down direction is increased.

Furthermore, a solid-cylindrical or hollow-cylindrical boss 84 is provided at each of intersections between the inclined ribs 82 (or the inclined ribs 83) and the lateral walls 78, 80 (or the lateral wall 81), and the boss 84 is thicker than the inclined ribs 82 and the lateral walls 78, 80.

The bosses 84 are, for example, applicable as bases for extrusion pins that contact with a single-piece casting member 24 when the single-piece casting member 24 is separated from dies at the time of molding the single-piece casting member 24. Other than the above, the bosses 84 are applicable as thick parts for improving the fluidity of material for the inclined ribs 82 and the lateral walls 78, 80 at the time of molding the single-piece casting member 24, and are also applicable as bases for mounting fastening members for mounting other components to the single-piece casting member 24.

### Operation and Advantageous Effects of Vehicle

Next, the operation and advantageous effects of the vehicle according to the present embodiment will be described.

As shown in FIG. 1 and FIG. 2, the vehicle 10 according to the present embodiment includes the single-piece casting member 24 and the front side members 38. In the present embodiment, the single-piece casting member 24 is configured to include the right and left wheel arches 12 and the cross member 14. The cross member 14 extends along the vehicle width direction. The right and left wheel arches 12 are connected by the cross member 14.

Here, in the single-piece casting member 24 according to the present embodiment, the right and left wheel arches 12 and the cross member 14 are cast in a single piece. Thus, in the present embodiment, fasteners for fastening the right and left front side members 38 to the right and left wheel arches 12 and for fastening each of the right and left wheel arches 12 to the cross member 14 are not needed, so the number of components can be reduced.

In the present embodiment, the front side member 38 extending in the vehicle front and rear direction is fixed at the lower part of the wheel arch 12.

In general, in the event of a frontal collision of the vehicle 10, the front side member 38 has the function of absorbing compression or impact energy; however, the front side member 38 is, for example, higher in a share ratio of energy absorption than a crush box. On the other hand, when the wheel arches 12 and the front side members 38 are cast in a single piece, the wheel arches 12 and the front side members 38 have a substantially U-shape open cross-section structure in which the outer side or the inner side in the vehicle width direction is open because of the structure of dies.

In the present embodiment, when the front side member 38 is formed separately from the single-piece casting member 24 including the wheel arches 12, even when a corresponding one of the wheel arches 12 itself has an open cross-section structure, the lower part of the wheel arch 12 can have a closed cross-section structure by fixing the front side member 38 to the lower part of the wheel arch 12.

For this reason, it is possible to improve stiffness in the wheel arch 12 provided with the front side member 38. In other words, in the present embodiment, even with a configuration including the single-piece casting member 24 having a so-called open cross-section structure, it is possible to ensure an energy absorption amount. It may be sufficient to form the lower part of the wheel arch 12 as a closed cross-section structure by fixing the front side member 38, so the front side member 38 does not necessarily need to have a closed cross-section structure.

In the present embodiment, when the front side member 38 is an extrusion member, the front side member 38 can have a higher stiffness than the front side member 38 that is a casting member. The front side member 38 is not limited to an extrusion member. The front side member 38 may be a sheet metal member formed of a sheet metal or may be a casting member formed by casting. In the case of a sheet metal member or a casting member, the flexibility of design can be increased as compared to an extrusion member.

Furthermore, in the present embodiment, as shown in FIG. 4, the front side member 38 has a closed cross-section structure in which the sectional shape taken along the vehicle width direction and the vehicle up and down direction is a closed cross section and can have a higher stiffness than an open cross-section structure as a comparative example, so it is possible to increase an energy absorption amount.

Here, in the present embodiment, the sectional shape of the front side member 38 is a substantially rectangular shape of which the longitudinal direction is the vehicle up and down direction. The front side member 38 is configured to include the inner wall 42, the outer wall 44, the upper wall 46, and the lower wall 48. The inner wall 42 and the outer wall 44 are longer in size than the upper wall 46 and the lower wall 48.

Thus, in comparison with a case where the sectional shape of the front side member 38 is a square shape, geometrical moment of inertia is increased. Therefore, it is possible to suppress so-called mountain fold or valley fold, that is, a breakage of the front side member 38 in the vehicle up and down direction, in the event of a frontal collision of the vehicle 10.

On the other hand, the wheel arch 12 is configured to include the upright wall 26 extending in the vehicle front and rear direction and the vehicle up and down direction. The inner wall 42 of the front side member 38 contacts with the upright wall 26. The front side member 38 is allowed to be coupled to the upright wall 26.

In this way, since the inner wall 42 of the front side member 38 is in contact with and coupled to the upright wall 26 of the wheel arch 12, it is possible to suppress so-called inward fold in which the front side member 38 folds inward in the vehicle width direction in the event of a vehicle frontal collision. Therefore, it is possible to assist in axial compression of the front side member 38 and efficiently absorb impact energy.

In the present embodiment, the wheel arch 12 is configured to further include the lateral wall 30 and the lower wall 32. The lateral wall 30 and the lower wall 32 are disposed so as to be opposed to each other. The lateral wall 30 projects toward the outer side in the vehicle width direction from the upright wall 26 and is allowed to be opposed to the upper wall 46 of the front side member 38. The lower wall 32 projects toward the outer side in the vehicle width direction from the upright wall 26 and is allowed to be opposed to the lower wall 48 of the front side member 38.

In other words, in the present embodiment, the front side member 38 is disposed (fixed) in a state of being fitted in the single-piece casting member 24. For this reason, it is possible to reduce mountain fold or valley fold of the front side member 38 in the even t of a frontal collision of the vehicle 10, so it is possible to assist in axial compression of the front side member 38. Thus, in the present embodiment, it is possible to sequentially crush the front side member 38 from the front end to the rear end, so it is possible to further efficiently absorb impact energy.

In the present embodiment, as shown in FIG. 2, the single-piece casting member 24 is configured to further include the front wall 28 and the cutout part 68. The front wall 28 is provided at the front end of the single-piece casting member 24. The cutout part 68 through which the front side member 38 can be inserted is formed in the front wall 28. In the present embodiment, the front side member 38 is inserted through the cutout part 68, and the front part 38A of the front side member 38 protrudes toward the vehicle front side beyond the front wall 28 of the single-piece casting member 24.

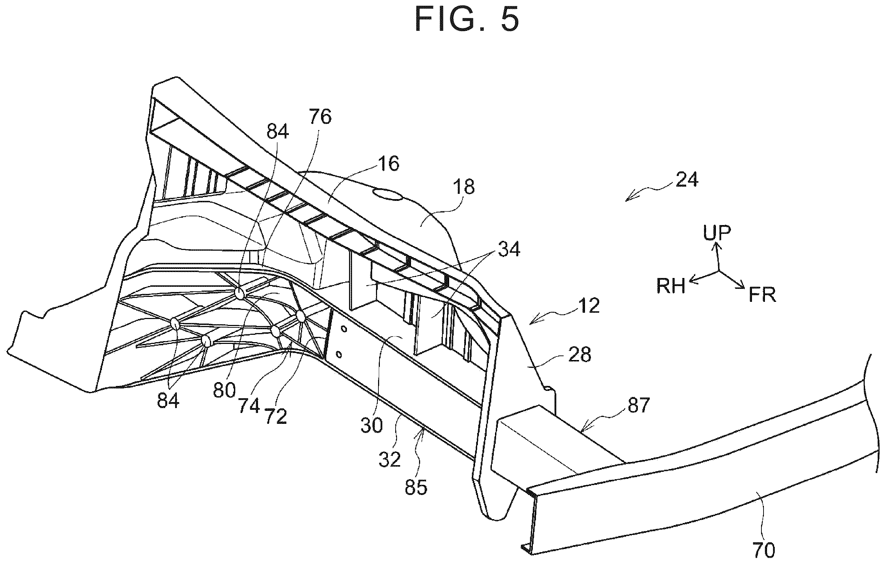

Thus, in the present embodiment, for example, in comparison with a configuration in which a crush box (side member) 87 is additionally provided on a front side of a front side member 85 as shown in FIG. 5, the number of components can be reduced. Thus, in the present embodiment, work for coupling members is reduced, and cost can be reduced accordingly.

In a first modification, as shown in FIG. 5, the crush box 87 may be, of course, provided additionally on the front side of the front side member 85. In this case, it is not necessary to form the cutout part 68 (see FIG. 2) in the front wall 28 of the single-piece casting member 24, and a rear end of the crush box 87 is coupled to the front wall 28 by welding or the like. In this way, when the front side member 85 and the crush box 87 are formed as separate members, the front side member 85 and the crush box 87 may be changed in material, shape, and the like.

In the present embodiment, as shown in FIG. 3, the single-piece casting member 24 is configured to further include the support wall 72 and the reinforcement part 74. The support wall 72 is provided on a rear side of the front side member 38 in the vehicle front and rear direction, and supports the rear end of the front side member 38. The reinforcement part 74 is configured to include the lateral walls 76, 78, 80 and the inclined ribs 82. The reinforcement part 74 has a truss structure made up of a plurality of triangles. The reinforcement part 74 is provided on the rear side of the support wall 72. The reinforcement part 74 includes the support wall 72 and has a higher stiffness than the other portions.

In this way, in the present embodiment, when the rear end of the front side member 38 is supported by the support wall 72 on the rear side of which the reinforcement part 74 is provided, it is possible to obtain sufficient reaction for axial compression of the front side member 38 in the event of a frontal collision of the vehicle 10. Thus, in the present embodiment, an impact load can be stably applied to the front side member 38. Conversely, in the present embodiment, it is possible to efficiently absorb impact energy by the amount of absorption by the front side member 38.

On the other hand, as shown in FIG. 4, the front side member 38 is fixed to the wheel arch 12 via the bolts 64. For this reason, for example, in comparison with a case where the front side member 38 is coupled to the wheel arch 12 by welding, it is possible to suppress a decrease in material stiffness due to heat.

When an impact load is input to the front side member 38 in the event of a frontal collision of the vehicle 10, shear force acts on the bolts 64; however, when the diameter size of the bolt 64, the number of bolts 64, the arrangement of the bolts 64, or the like is adjusted, it is possible to suppress detachment of the front side member 38 from the wheel arch 12.

Here, in FIG. 4, an example in which the bosses 58 are upright from the inner surface 26A of the upright wall 26 of the wheel arch 12 and the bolts 64 are fastened to the bosses 58 has been described as a method of fixing the front side member 38 to the wheel arch 12; however, the fixing method is not limited thereto.

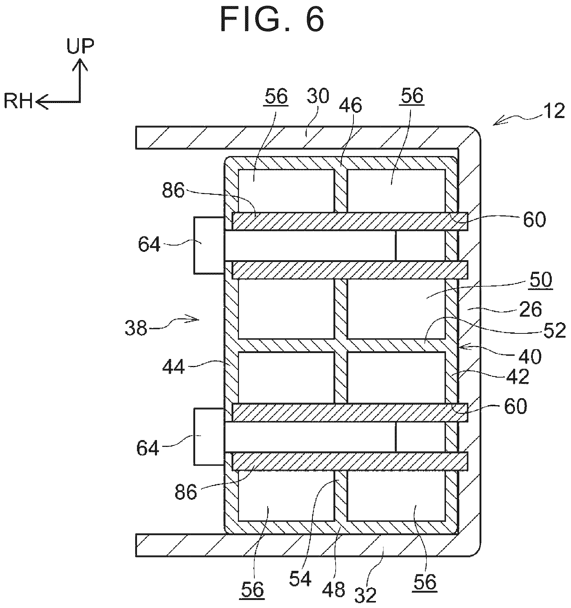

For example, in a second modification, as shown in FIG. 6, to fix the front side member 38 to the wheel arch 12, a hollow cylindrical collar 86 made of metal may be used instead of the boss 58 shown in FIG. 4. In this case, the hollow cylindrical collar 86 is mounted to the front side member 38, and the bolt 64 is fastened to the hollow cylindrical collar 86.

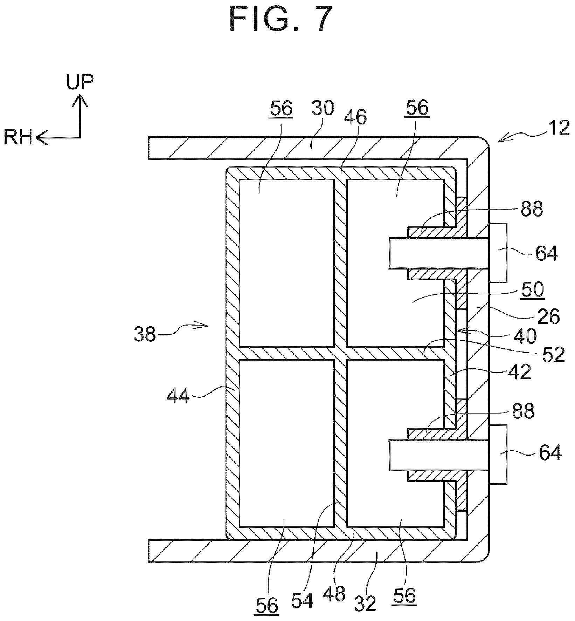

In a third modification, as shown in FIG. 7, to fix the front side member 38 to the wheel arch 12, a pop nut 88 may be used. In these cases, the number of components increases; however, the bosses 58 do not need to be upright on the wheel arch 12.

In the above-described present embodiment, as shown in FIG. 1, an example in which, in the single-piece casting member 24, the right and left wheel arches 12 and the cross member 14 are cast in a single piece has been described; however, the configuration is not limited thereto. For example, although not shown in the drawing, in a right-side casting member, the right wheel arch 12 and the right half of the cross member 14 are cast in a single piece and, in a left-side casting member, the left wheel arch 12 and the left half of the cross member 14 are cast in a single piece, the right-side casting member and the left-side casting member may be coupled in a single piece at a coupling part.

In the above-described embodiment, the front side member 38 has been described; however, the aspect of the invention is also applicable to other than the front side member 38. For example, the aspect of the invention may be applied to a rear side member 90 (see FIG. 1). A direction in which an impact load is input varies depending on a framework member to be applied.

One embodiment of the invention has been described above; however, the invention is not limited to the embodiment. The embodiment and various modifications may be combined as needed. Of course, the invention can be implemented in various modes without departing from the scope of the invention.

### Addendum

A vehicle body structure according to the invention may be configured by combining the following configurations as needed.

### Configuration 1

A vehicle includes: a single-piece casting member configured to include right and left wheel arches and a cross member extending in a vehicle width direction and connecting the right and left wheel arches, the right and left wheel arches and the cross member being cast in a single piece, or the right and left wheel arches and the cross member being divided at a coupling part provided at a predetermined location in the vehicle width direction, divided parts each being cast in a single piece, and the divided parts being coupled to each other in a single piece at the coupling part; and a side member fixed to a lower part of a corresponding one of the wheel arches that are components of part of the single-piece casting member and extending in a vehicle front and rear direction.

### Configuration 2

In the single-piece casting member, the right and left wheel arches and the cross member are cast in a single piece.

### Configuration 3

The side member is a front side member provided at a vehicle front part. Configuration 4

The front side member is an extrusion member formed of an extrusion material or a sheet metal member formed of a sheet metal.

### Configuration 5

When a cross section of the front side member is taken along the vehicle width direction and a vehicle up and down direction, a sectional shape of the front side member has a closed cross-section structure with a closed cross section.

### Configuration 6

The sectional shape of the front side member is a substantially rectangular shape, the front side member includes an inner wall that makes up an inner side of the front side member in the vehicle width direction, an outer wall that makes up an outer side of the front side member in the vehicle width direction and that is disposed to be opposed to the inner wall, an upper wall connecting upper ends of the inner wall and the outer wall, and a lower wall connecting lower ends of the inner wall and the outer wall and provided to be opposed to the upper wall, and a corresponding one of the wheel arches is configured to include an upright wall extending in the vehicle front and rear direction and the vehicle up and down direction, the inner wall being in contact with the upright wall, the front side member being allowed to be coupled to the upright wall.

### Configuration 7

Each of the wheel arches is configured to further include a first lateral wall projecting from the upright wall toward an outer side in the vehicle width direction and allowed to be opposed to the upper wall, and a second lateral wall projecting from the upright wall toward the outer side in the vehicle width direction, the second lateral wall being disposed so as to be opposed to the first lateral wall, the second lateral wall being allowed to be opposed to the lower wall.

### Configuration 8

The single-piece casting member is configured to further include a front wall provided at a front end in the vehicle front and rear direction, and a cutout part cut out in the front wall toward an inner side in the vehicle width direction, the front side member being inserted through the cutout part to protrude a front end of the front side member in the vehicle front and rear direction toward a vehicle front side beyond the front wall.

### Configuration 9

The front side member is coupled to the single-piece casting member by a fastening member.

### Configuration 10

The single-piece casting member is configured to further include a support wall provided on a rear side of the front side member in the vehicle front and rear direction and configured to support a rear end of the front side member, and a reinforcement part provided on a rear side of the support wall in the vehicle front and rear direction, the reinforcement part being configured to include the support wall, the reinforcement part having a higher stiffness than other portions.

## Claims

1. A vehicle (10) comprising:
a single-piece casting member (24) configured to include right and left wheel arches (12) and a cross member (14) extending in a vehicle width direction and connecting the right and left wheel arches (12), the right and left wheel arches (12) and the cross member (14) being cast in a single piece, or the right and left wheel arches (12) and the cross member (14) being divided at a coupling part provided at a predetermined location in the vehicle width direction, divided parts each being cast in a single piece, and the divided parts being coupled to each other in a single piece at the coupling part; and
a side member (38; 85; 90) fixed to a lower part of a corresponding one of the wheel arches (12) that are components of part of the single-piece casting member (24) and extending in a vehicle front and rear direction.

2. The vehicle (10) according to claim 1, wherein, in the single-piece casting member (24), the right and left wheel arches (12) and the cross member (14) are cast in a single piece.

3. The vehicle (10) according to claim 1, wherein the side member (38; 85; 90) is a front side member (38; 85) provided at a vehicle front part.

4. The vehicle (10) according to claim 3, wherein the front side member (38; 85) is an extrusion member formed of an extrusion material or a sheet metal member formed of a sheet metal.

5. The vehicle (10) according to claim 3, wherein, when a cross section of the front side member (38; 85) is taken along the vehicle width direction and a vehicle up and down direction, a sectional shape of the front side member (38; 85) has a closed cross-section structure (40) with a closed cross section.

6. The vehicle (10) according to claim 5, wherein:
the sectional shape of the front side member (38; 85) is a substantially rectangular shape;
the front side member (38; 85) includes
an inner wall (42) that makes up an inner side of the front side member (38; 85) in the vehicle width direction,
an outer wall (44) that makes up an outer side of the front side member (38; 85) in the vehicle width direction and that is disposed to be opposed to the inner wall (42),
an upper wall (46) connecting upper ends of the inner wall (42) and the outer wall (44), and
a lower wall (48) connecting lower ends of the inner wall (42) and the outer wall (44) and provided to be opposed to the upper wall (46); and
a corresponding one of the wheel arches (12) is configured to include an upright wall (26) extending in the vehicle front and rear direction and the vehicle up and down direction, the inner wall (42) being in contact with the upright wall (26), the front side member (38; 85) being allowed to be coupled to the upright wall (26).

7. The vehicle (10) according to claim 6, wherein each of the wheel arches (12) is configured to further include
a first lateral wall (30) projecting from the upright wall (26) toward an outer side in the vehicle width direction and allowed to be opposed to the upper wall (46), and
a second lateral wall (32) projecting from the upright wall (26) toward the outer side in the vehicle width direction, the second lateral wall (32) being disposed so as to be opposed to the first lateral wall (30), the second lateral wall (32) being allowed to be opposed to the lower wall (48).

8. The vehicle (10) according to claim 3, wherein the single-piece casting member (24) is configured to further include
a front wall (28) provided at a front end in the vehicle front and rear direction, and
a cutout part (68) cut out in the front wall (28) toward an inner side in the vehicle width direction, the front side member (38; 85) being inserted through the cutout part (68) to protrude a front end of the front side member (38; 85) in the vehicle front and rear direction toward a vehicle front side beyond the front wall (28).

9. The vehicle (10) according to claim 3, wherein the front side member (38; 85) is coupled to the single-piece casting member (24) by a fastening member (64).

10. The vehicle (10) according to claim 3, wherein the single-piece casting member (24) is configured to further include
a support wall (72) provided on a rear side of the front side member (38; 85) in the vehicle front and rear direction and configured to support a rear end of the front side member (38; 85), and
a reinforcement part (74) provided on a rear side of the support wall (72) in the vehicle front and rear direction, the reinforcement part (74) being configured to include the support wall (72), the reinforcement part (74) having a higher stiffness than other portions.
